# EUROPÄISCHE PATENTANMELDUNG

(11) **EP 4 001 695 A1**
(43) Veröffentlichungstag der Anmeldung: **25.05.2022**
(21) Anmeldenummer: 20208819.1
(22) Anmeldetag: 20.11.2020
(51) Int. Cl.: F16H 7/08

(54) **AUTOMATISCHE EINSTELLUNG UND ÜBERWACHUNG EINES RIEMENANTRIEBS**

(71) Anmelder: Lindner, Manuel, 9800 Spittal/Drau (AT)
(72) Erfinder: LINDNER, Manuel, 9800 Spittal/Drau (AT); PFEIFER, Fabian, 9184 St. Jakob im Rosental (AT)
(74) Vertreter: Grünecker Patent- und Rechtsanwälte PartG mbB

(57) **Zusammenfassung**

Die Erfindung betrifft eine Riemenspannvorrichtung mit einer Spannvorrichtung zum Erzeugen einer Kraft zum Spannen eines Riemens in einem Riemenantrieb; einer Messeinrichtung zum Messen einer Riemenspannung oder einer der Riemenspannung entsprechenden Messgröße; und einer Stelleinrichtung zum Stellen der mit der Spannvorrichtung erzeugten Kraft basierend auf Signalen von der Messeinrichtung.

## Beschreibung

### Gebiet der Erfindung

Die Erfindung betrifft eine Vorrichtung und ein Verfahren zum Einstellen und Überwachen eines Riemenantriebs.

### Stand der Technik

In der Abfallindustrie werden für die Zerkleinerung des Materials, Schredder verwendet. Vereinfacht beschrieben, bestehen solche Schredder aus einem sich drehenden Rotor und dem Gehäuse. Material wird von oben in den Schneidraum aufgegeben. Durch Drehung eines oder mehreren Rotoren wird das Material zwischen den Schneidelementen befördert um anschließend zerschnitten bzw. zerrissen zu werden. Der Rotor bzw. die Rotoren werden z.B. mittels Elektromotoren angetrieben. Für die Kraftübertragung vom Elektromotor zum Rotor dienen unter anderem Riemen, hauptsächlich in der Ausführung als Keilriemen. Die Drehrichtung wird üblicher Weise nicht auf eine Seite beschränkt, sondern kann häufig wechseln. Der Riemenantrieb ist eine gängige Lösung im Maschinen- und Anlagenbau.

Die Vorteile des Riementriebes sind etwa ein ruhiger und geräuscharmer Lauf, Stoßdämpfung, kurzzeitige Überlastfähigkeit (Riemenschlupf - nicht bei Zahnriemen), geringes Verhältnis von Gewicht/Leistung und hohe Umlaufgeschwindigkeiten (Drehzahlen). Vor allem die stoßdämpfende Wirkung des Riementriebs, führen bei Zerkleinerungsmaschinen zu einem ruhigen Lauf.

Die Nachteile dieses Antriebskonzeptes sind ein begrenzter Temperaturbereich, der Riemenverschleiß, hauptsächlich durch die Dehnung des Riemens (Nachspannen erforderlich), Empfindlichkeit gegen äußere Einflüsse (Öl, Benzin, Temperatur, Schmutz, Wasser, Staub), ständiger Dehnschlupf (ca. 2 % - nicht bei Zahnriemen) und große Wellenbelastungen (1,2-2,5-fach mal Umfangskraft) je nach Riemenart.

Um eine optimale Kraftübertragung bzw. Standzeiten des Riemenantriebes zu gewährleisten, ist es erforderlich den Riemen korrekt zu spannen, und die Riemenspannung konstant zu halten. Die Auslegung des Riemenantriebs und somit auch den Wert der Riemenspannung erfolgt durch den Riemenhersteller. Die Riemenspannung ist die Kraft, die zwischen Antriebs- und Abtriebsachse (bzw. Antriebs- und Abtriebswelle) radial wirkt und auf der direkten Verbindungsgeraden zwischen den beiden Achsen (bzw. Wellen) angreift. In der Auslegung des Riemenantriebes wird diese erforderliche Spannkraft (Statische und Dynamische Lagerkraft) angegeben. Für das in der Praxis gängige Überprüfen der Riemenspannung wird die erforderliche Eigenfrequenz des Riemens, im Betriebszustand, angegeben. Die Messung der Riemenspannung von Antriebsriemen erfolgt dabei durch Messung der Frequenz, mit der sie vibrieren. Ein Messkopf wird über den zu messenden Riemen gehalten. Anschließend wird der vorgespannte Riemen in Schwingung versetzt (Anzupfen/Anschlagen). Das Ergebnis der Messung wird in Hertz [Hz] angezeigt.

Durch Änderung eines Achsabstandes zwischen Antrieb und Abtrieb wird die gewünschte Riemenspannung eingestellt.

Die beispielsweise aus der Automobiltechnik bekannte Spannvorrichtung für den Keilriemen der Lichtmaschine weist eine Spannrolle auf, die zum Spannen des Riemens z.B. von außen auf das Leertrum (gezogenes Trum des Riemens) drückt. Die Anordnung eignet sich auch für größere Triebe mit festem Wellenabstand. Ein Drehrichtungswechsel ist dabei jedoch ausgeschlossen, weil dann ein Wechsel von gezogenem und antreibendem Trum erfolgt. Diese Spannvorrichtung ist jedoch für den Einsatz in Shreddern für die Abfallzerkleinerung wegen der notwendigen Möglichkeit zur Drehrichtungsumkehr nicht geeignet.

Da die Spannung aufgrund von Dehnung und Verschleiß des Riemens mit der Zeit nachlässt, ist es erforderlich diese zu überprüfen und ggf. nachzustellen. Die Bestimmung des Verschleißgrades des Riemens erfolgt durch Sichtkontrolle des Riemens selbst, anhand von Betriebsstunden oder durch Feststellen einer Häufung von Rutschungen des Riementriebes.

Das manuelle Überprüfen und Nachstellen der Riemenspannung bindet Ressourcen von Mensch und Maschine. Zudem kann ein nicht korrekt gespannter Riemen die Kraftübertragung und somit die Prozessfähigkeit der Maschinen beeinträchtigen.

### Beschreibung der Erfindung

Aufgabe der Erfindung ist es, die genannten Nachteile des Stands der Technik zumindest teilweise zu mildern oder auszuräumen.

Die Aufgabe wird gelöst durch eine Riemenspannvorrichtung nach Patentanspruch 1.

Die erfindungsgemäße Riemenspannvorrichtung umfasst eine Spannvorrichtung zum Erzeugen einer Kraft zum Spannen eines Riemens in einem Riemenantrieb; eine Messeinrichtung zum Messen einer Riemenspannung oder einer der Riemenspannung entsprechenden Messgröße; und eine Stelleinrichtung zum Stellen der mit der Spannvorrichtung erzeugten Kraft basierend auf Signalen von der Messeinrichtung.

Der Vorteil der erfindungsgemäßen Riemenspannvorrichtung besteht darin, dass ein automatisiertes System für das Spannen des Riemens bereitgestellt wird, wobei ein Messen der Riemenspannung des Riemens erfolgt.

Die erfindungsgemäße Riemenspannvorrichtung kann dahingehend weitergebildet werden, dass die Stelleinrichtung dazu ausgebildet ist, die mit der Spannvorrichtung erzeugten Kraft so zu stellen, dass ein Sollwert der gemessenen Riemenspannung oder der der Riemenspannung entsprechenden Messgröße erzielt wird.

Eine andere Weiterbildung besteht darin, dass die Stelleinrichtung dazu ausgebildet sein kann, im Betrieb des Riemenantriebs zyklisch oder kontinuierlich die gemessene Riemenspannung oder die der Riemenspannung entsprechenden Messgröße zu überwachen.
Gemäß einer anderen Weiterbildung kann die Spannvorrichtung ein Hubspindelgetriebe oder einen Linearaktuator umfassen, insbesondere einen Hydraulikzylinder oder einen Elektrozylinder.

Eine andere Weiterbildung besteht darin, dass die Messeinrichtung zum Messen der Riemenspannung oder der der Riemenspannung entsprechenden Messgröße einen Kraftaufnehmer, insbesondere einen elektronischen Kraftaufnehmer, eine Kraftmessdose, einen hydraulischen Kraftaufnehmer, einen Druckaufnehmer, einen Drucksensor, oder einen Dehnmesstreifen; oder eine Messeinrichtung zum Messen der Stromaufnahme eines Elektromotors zum Erzeugen der Kraft umfassen kann.

Die erfindungsgemäße Riemenspannvorrichtung oder eine der Weiterbildungen davon kann zudem eine Messvorrichtung zum Erfassen einer Längendehnung des Riemens oder einer der Längendehnung des Riemens entsprechenden Messgröße umfassen. Dadurch kann ein Bestimmen des Verschleißgrades des Riemens erfolgen.

Gemäß einer Weiterbildung davon kann die Messvorrichtung zum Erfassen der Längendehnung des Riemens ausgebildet sein zum Messen des Hubes des Hubspindelgetriebes und Bestimmen der Längendehnung aus dem gemessenen Hub, wenn die Spannvorrichtung ein Hubspindelgetriebe umfasst; zum Messen eines Achsabstandes einer treibenden und einer getriebenen Scheibe des Riemenantriebs und Bestimmen der Längendehnung aus dem gemessenen Achsabstand, insbesondere wobei die Messvorrichtung zum Erfassen der Längendehnung des Riemens einen Seilzug-Wegsensor, einen Neigungssensor, einen Laser-Distanzsensor oder ein Winkelmessgerät umfasst; oder zum Messen einer Positionsänderung eines Linearaktuators und Bestimmen der Längendehnung aus der gemessenen Positionsänderung.

Dies kann dahingehend weitergebildet werden, dass die Messvorrichtung zum Erfassen der Längendehnung dazu ausgebildet ist, bei Erreichen oder Überschreiten eines vorgegebenen Schwellwerts der Längendehnung des Riemens ein Signal auszugeben.

Eine andere Weiterbildung besteht darin, dass die Spannvorrichtung einen Hydraulikzylinder umfasst und die Stelleinrichtung eine Hydraulik-Steuereinheit zum Einstellen eines Drucks im Hydraulikzylinder auf einen Drucksollwert, der einem Sollwert einer Riemenspannung entspricht, umfasst, insbesondere wobei ein Druckregelventil zur Vorgabe des Drucksollwerts vorgesehen ist.

Dies kann dahingehend weitergebildet werden, dass die Hydraulik-Steuereinheit dazu ausgebildet ist, im Betrieb des Riemenantriebs zyklisch oder kontinuierlich den Druck im Hydraulikzylinder zu überwachen.

Dabei kann die Hydraulik-Steuereinheit dazu ausgebildet sein, im Falle eines Unterschreitens eines unteren Schwellwerts des Drucks und/oder im Falle eines Überschreitens eines oberen Schwellwerts des Drucks, den Druck auf den Drucksollwert einzustellen.

Die Erfindung stellte weiterhin einen Riemenantrieb bereit, der einen Riemen und eine erfindungsgemäße Riemenspannvorrichtung oder eine oder mehrere der genannten Weiterbildungen umfasst.

Dies kann dahingehend weitergebildet werden, dass der Riemenantrieb einen Motor, insbesondere einen Elektromotor, mit einer treibenden Scheibe und eine getriebene Scheibe umfasst, wobei die treibende Scheibe dazu vorgesehen ist, mit dem Riemen die getriebene Scheibe anzutreiben; und wobei die Riemenspannvorrichtung dazu ausgebildet ist, einen Abstand zwischen einer Drehachse der treibenden Scheibe und einer Drehachse der angetriebenen Scheibe zu ändern.

Die oben genannte Aufgabe wird ebenfalls gelöst durch ein Verfahren zum Einstellen einer Riemenspannung eines Riemens in einem Riemenantrieb nach Patentanspruch 13.

Das erfindungsgemäße Verfahren umfasst die Schritte: Erzeugen einer Kraft zum Spannen des Riemens, wobei die Kraft insbesondere zwischen einer Drehachse einer treibenden Scheibe und einer Drehachse einer angetriebenen Scheibe wirkt, wodurch ein Abstand der Drehachsen gestellt wird; Messen einer Riemenspannung oder einer der Riemenspannung entsprechenden Messgröße mit einer Messeinrichtung; Stellen der Kraft basierend auf Signalen von der Messeinrichtung; und Erfassen einer Längendehnung des Riemens.

Gemäß einer Weiterbildung des erfindungsgemäßen Verfahrens kann die mit der Spannvorrichtung erzeugte Kraft so eingestellt werden, dass ein Sollwert der gemessenen Riemenspannung oder der der Riemenspannung entsprechenden Messgröße erzielt wird.

Eine andere Weiterbildung besteht darin, dass bei Erreichen oder Überschreiten eines vorgegebenen Schwellwerts der Längendehnung des Riemens ein Signal ausgegeben wird.

Eine vorteilhafte Ausgestaltung der Erfindung ist nachfolgend beschrieben. Die erfindungsgemäße Riemenspannvorrichtung umfasst in dieser Ausgestaltung einen Hydraulikzylinder zum Spannen eines Riemens in einem Riemenantrieb; und eine Hydraulik-Steuereinheit zum Einstellen eines Drucks im Hydraulikzylinder auf einen Drucksollwert, der einem Sollwert einer Riemenspannung entspricht. Mit der Hydraulik-Steuereinheit kann der Druck im Hydraulikzylinder automatisch auf den Drucksollwert eingestellt werden. Der Drucksollwert entspricht dabei einem Sollwert für die Riemenspannung. Allgemein entspricht der Druck im Hydraulikzylinder (Öldruck) einer Riemenspannung. Beispielsweise wird der Riemen mit dem Hydraulikzylinder dadurch gespannt, dass eine Kraft zwischen einer antreibenden Scheibe und einer über den Riemen angetriebenen Scheibe wirkt, die in Richtung einer Abstandsvergrößerung zwischen den Scheiben wirkt.

Eine Weiterbildung dieser Ausgestaltung der erfindungsgemäßen Vorrichtung besteht darin, dass ein Druckregelventil zur Vorgabe des Drucksollwerts vorgesehen ist.

Gemäß einer anderen Weiterbildung dieser Ausgestaltung ist die Hydraulik-Steuereinheit dazu ausgebildet, im Betrieb des Riemenantriebs zyklisch oder kontinuierlich den Druck im Hydraulikzylinder zu überwachen.

Dies kann dahingehend weitergebildet werden, dass die Hydraulik-Steuereinheit dazu ausgebildet ist, im Falle eines Unterschreitens eines unteren Schwellwerts des Drucks und/oder im Falle eines Überschreitens eines oberen Schwellwerts des Drucks, den Druck auf den Drucksollwert einzustellen.

Die erfindungsgemäße Riemenspannvorrichtung oder eine der Weitebildungen gemäß dieser Ausgestaltung kann weiterhin eine Wegmessvorrichtung zum Erfassen einer Position einer Kolbenstange des Hydraulikzylinders umfassen.

Dies kann dahingehend weitergebildet werden, dass die Hydraulik-Steuereinheit dazu ausgebildet ist, eine Längendehnung des Riemens aufgrund einer erfassten Positionsänderung der Kolbenstange zu bestimmen.

Dabei kann die Hydraulik-Steuereinheit dazu ausgebildet sein, bei Erreichen oder Überschreiten eines vorgegebenen Schwellwerts der Längendehnung des Riemens ein Signal auszugeben.

Die Erfindung stellt in dieser Ausgestaltung ebenfalls einen Riemenantrieb bereit, der einen Riemen und eine erfindungsgemäße Riemenspannvorrichtung oder einer deren Weiterbildungen umfasst.

Der Riemenantrieb kann einen (Elektro-)Motor mit einer treibenden Scheibe und eine getriebene Scheibe umfassen, wobei die treibende Scheibe mit dem Riemen die getriebene Scheibe antreibt. Der erfindungsgemäße Riemenantrieb ist für eine Drehrichtungsumkehr der Scheiben geeignet.

Ein solcher Riemenantrieb kann beispielsweise in einer Zerkleinerungsvorrichtung (Schredder) eingesetzt werden. Die Zerkleinerungsvorrichtung mit dem erfindungsgemäßen Riemenantrieb kann für die Zerkleinerung (Schreddern) von Abfall (Müll, insbesondere Hausmüll) eingesetzt werden. Aufgrund der bei diesen Zerkleinerungsvorrichtungen häufig notwendigen Umkehr der Drehrichtung der durch den Riemenantrieb angetriebenen Zerkleinerungswellen, beispielsweise wegen eingeklemmten Abfallstücken, ist die Eignung des Riemenantriebs für die Drehrichtungsumkehr der Zerkleinerungswellen wichtig.

Das erfindungsgemäße Verfahren zum Einstellen einer Riemenspannung eines Riemens in einem Riemenantrieb umfasst in dieser Ausgestaltung ein Spannen des Riemens mit einem Hydraulikzylinder und ein Einstellen eines Drucks im Hydraulikzylinder auf einen Drucksollwert, der einem Sollwert der Riemenspannung entspricht.

Dabei kann der der Druck im Hydraulikzylinder im Betrieb des Riemenantriebs zyklisch oder kontinuierlich überwacht werden.

Die kann dahingehend weitergebildet werden, dass im Falle eines Unterschreitens eines unteren Schwellwerts des Drucks und/oder im Falle eines Überschreitens eines oberen Schwellwerts des Drucks, der Druck auf den Drucksollwert eingestellt wird.

Eine Weiterbildung besteht darin, dass der Schritt eines Erfassens einer Position einer Kolbenstange des Hydraulikzylinders vorgesehen ist.

Eine Längendehnung des Riemens kann aufgrund einer erfassten Positionsänderung der Kolbenstange bestimmt werden.

Bei Erreichen oder Überschreiten eines vorgegebenen Schwellwerts der Längendehnung des Riemens kann ein Signal ausgeben werden.

Die Vorteile des erfindungsgemäßen Verfahrens entsprechen jenen der erfindungsgemäßen Vorrichtung. Das erfindungsgemäße Verfahren kann insbesondere mit der erfindungsgemäßen Vorrichtung oder einer deren Weiterbildung durchgeführt werden.

Weitere Merkmale und beispielhafte Ausführungsformen sowie Vorteile der vorliegenden Erfindung werden nachfolgend anhand der Zeichnung näher erläutert. Es versteht sich, dass diese Ausführungsform nicht den gesamten Bereich der vorliegenden Erfindung erschöpfen kann. Es versteht sich weiterhin, dass einige oder sämtliche der im Weiteren beschriebenen Merkmale auch auf andere Weise miteinander kombiniert werden können.

### Kurzbeschreibung der Zeichnungen

- Fig. 1: zeigt eine allgemeine Ausführungsform der erfindungsgemäßen Riemenspannvorrichtung.
- Fig. 2: zeigt eine weitere Ausführungsform der erfindungsgemäßen Riemenspannvorrichtung.
- Fig. 3: zeigt noch eine weitere Ausführungsform der erfindungsgemäßen Riemenspannvorrichtung.
- Fig. 4: zeigt eine Abwandlung der Ausführungsform gemäß Fig. 3.
- Fig. 5: zeigt eine andere Ausführungsform der erfindungsgemäßen Riemenspannvorrichtung.
- Fig. 6: zeigt eine allgemeine Darstellung des Verfahrensablaufs zur Regelung der Riemenspannung.
- Fig. 7: zeigt eine Darstellung des Verfahrensablaufs zur Regelung der Riemenspannung im Falle der Ausführungsform gemäß Fig. 2, 3 und 5.
- Fig. 8: zeigt eine Darstellung des Verfahrensablaufs zur Regelung der Riemenspannung im Falle der Ausführungsform gemäß Fig. 4.

### Ausführungsformen

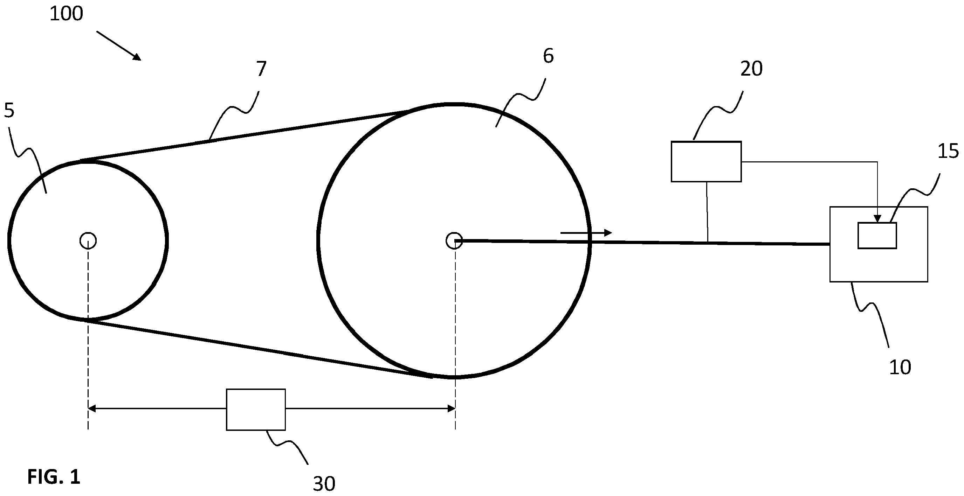

Fig. 1 zeigt eine allgemeine Ausführungsform der erfindungsgemäßen Riemenspannvorrichtung.

In allgemeiner Form umfasst die erfindungsgemäße Riemenspannvorrichtung 100 eine Spannvorrichtung 10 zum Erzeugen einer Kraft (siehe Pfeil nach rechts) zum Spannen eines Riemens 7 in einem Riemenantrieb, eine Messeinrichtung 20 zum Messen einer Riemenspannung oder einer der Riemenspannung entsprechenden Messgröße, eine Stelleinrichtung 15 zum Stellen der mit der Spannvorrichtung 10 erzeugten Kraft basierend auf Signalen von der Messeinrichtung 20, und optional eine Messvorrichtung 30 zum Erfassen einer Längendehnung des Riemens 7 oder einer der Längendehnung des Riemens 7 entsprechenden Messgröße. Der Riemen 7 läuft über die Scheiben 5, 6. Beispielsweise ist die Scheibe 6 die antreibende Scheibe und die Scheibe 5 die angetriebene Scheibe des Riemenantriebs. In diesem Beispiel wird die Scheibe 6 durch Angreifen der von der Spannvorrichtung 10 erzeugten Kraft von der Scheibe 5 weggezogen, in Richtung einer Vergrößerung des Abstandes der Drehachsen der Scheiben 5, 6. Alternativ kann auch die Scheibe 5 von der Scheibe 6 weggezogen werden. Die Messeinrichtung 20 erfasst eine Messgröße, die der an der Scheibe 6 anliegenden Kraft entspricht (insbesondere dazu proportional ist). Die Spannvorrichtung kann z.B. einen Motor aufweisen, der direkt oder indirekt über Lager an der Drehachse der Scheibe 6 angreift. Die Messvorrichtung 30 zum Erfassen einer Längendehnung des Riemens oder einer der Längendehnung des Riemens 7 entsprechenden Messgröße misst in diesem Beispiel den Abstand der Drehachsen der Scheiben 5 und 6. Aus einer Änderung dieses Abstands kann auf eine Änderung der Länge des Riemens über die Nutzungsdauer bzw. während des Betriebs geschlossen und die Längendehnung des Riemens ermittelt werden.

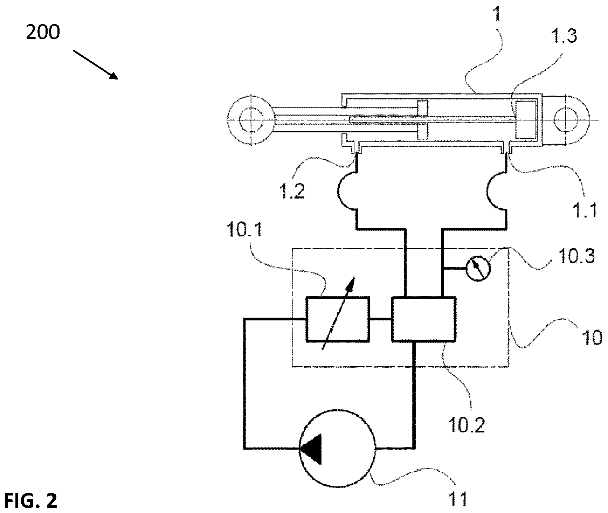

Fig. 2 zeigt eine weitere Ausführungsform 200 der erfindungsgemäßen Riemenspannvorrichtung.

Die Erfindung ist gemäß dieser Ausführungsform 200 auf eine automatische Einstellung der Riemenspannung durch einen Hydraulikzylinder gerichtet. Dabei kann das Spannelement (Aktuator, Hydraulikzylinder) gleichzeitig für das Einstellen der Riemenspannung, für die Messung der Riemenspannung sowie auch für die Indikation vom Verschleiß des Riemens verwendet werden.

Um die benötigte Riemenspannung aufrecht zu halten, wird der Riementrieb mittels eines Hydraulikzylinders mit konstanter Kraft gespannt. Der Hydraulikzylinder wird mit einem bestimmten Druck beaufschlagt um die geforderte Riemenspannung zu erreichen. Es wird der anstehende Druck in System bzw. Hydraulikzylinder gemessen. Da die wirkende Kolbenfläche konstant bleibt, stehen Duck und Kraft direkt proportional zu einander. Wird der Druck an der korrekten Stelle im System gemessen kann auf die wirkende Kraft und somit auf die Riemenspannung geschlossen werden.

Ein Verschleißindikator eines Riementriebes ist die Längendehnung des Riemens selbst. Hersteller von Riemen/Kraftbänder legen die maximal zulässige Dehnung über deren Lebensdauer fest. Der zulässige Wert der Dehnung wird in Verhältnis zur ursprünglichen Länge im Neuzustand angegeben. Gängige zulässige Dehnungen liegen bei ca. 1,5 - 2 %. Ist dieser Wert überschritten, hat der Riemen seine Ablegereife erreicht.

Eine solche Ausführungsform der erfindungsgemäßen Riemenspannvorrichtung 200 ist in Fig. 2 dargestellt.

Die Riemenspannvorrichtung 200 umfasst einen Hydraulikzylinder 1 zum Spannen eines Riemens in einem Riemenantrieb; und eine Hydraulik-Steuereinheit 10 zum Einstellen eines Drucks im Hydraulikzylinder 1 auf einen Drucksollwert, der einem Sollwert einer Riemenspannung entspricht. Mit der Hydraulik-Steuereinheit 10 kann der Druck im Hydraulikzylinder 1 automatisch auf den Drucksollwert eingestellt werden.

Das Hydrauliksystem (erfindungsgemäße Riemenspannvorrichtung 200) besteht beispielsweise aus einem handelsüblichen Hydraulikaggregat 11, einer Hydraulik-Steuereinheit 10 und dem Hydraulikzylinder 1 mit integrierter Wegmessung. Die Steuereinheit 10 besteht wiederum aus einem proportional einstellbaren Druckregelventil 10.1, einer Ventileinheit (bestehend aus einem oder mehreren WegeVentilen mit Magnetbetätigung) 10.2 und einem elektronischen Druckaufnehmer 10.3.

Beim automatischen Spannvorgang eines neuen Riemens, wird über das Druckregelventil 10.1 der Sollwert für die Riemenspannung vorgegeben. Der Sollwert entspricht dem Druck, der erforderlich ist um den Riemen mit der korrekten Kraft zu spannen. Die Ventileinheit 10.2 wird so geschaltet, dass der Druck an der Kolbenseite des Hydraulikzylinders 1.1 ansteht. Der Hydraulikzylinder fährt soweit aus bis der Riemen gespannt ist. Es stellt sich somit ein Kräftegleichgewicht zwischen Hydraulikzylinder, der Mechanik und dem Riemen ein. Wenn Sollwert 10.1 und Istwert 10.3 übereinstimmen ist der Riemen mit der korrekten Kraft, laut Riemengetriebeauslegung, gespannt. Es wird die Position der Kolbenstange des Hydraulikzylinders 1 vom integrierten Wegmesssystem 1.3 erfasst. Diese Position stellt den Startwert der Verschleißindikation des Riemens dar. Der kolbenseitige Druck 1.1 wird von einem Druckaufnehmer 10.3 überwacht. Die Überwachung von Sollwert 10.1 und Istwert 10.3 soll die Prozesssicherheit des Systems gewährleisten.

Das System überwacht zyklisch (z.B. beim Maschinenbetrieb ohne Last, damit deren Einflüsse ausgeschlossen werden) oder ständig den Istwert vom Druckaufnehmer 10.3. Über- oder unterschreitet dieser Wert einen definierten Schwellwert, wird, wie oben beschrieben, nachgestellt.

Eine Ursache für ein Unterschreiten des Istwertes (Nachlassen der Riemenspannung) ist die Längendehnung des Riemens aufgrund von Verschleiß während des Betriebes. Diese Unterschreitung wird vom System erkannt und korrigiert. Die Längendehnung des Riemens hat auch zur Folge, dass die Kolbenstage des Hydraulikzylinders immer weiter ausfährt. Dieser Weg, welche die Kolbenstange vom zuvor gesetzten Startwert zurücklegt, ist die Längendehnung und somit auch der Indikator des Verschleißgrades des Riemens. Hat der Riemen die maximale Dehnung erreicht, gibt das System eine entsprechende Meldung aus.

Alternativ kann die Wegmessung auch mittels eigenen Wegmesszylinders, Seilzug-Wegsensor, Neigungssensor oder Laser Distanzsensor erfolgen.

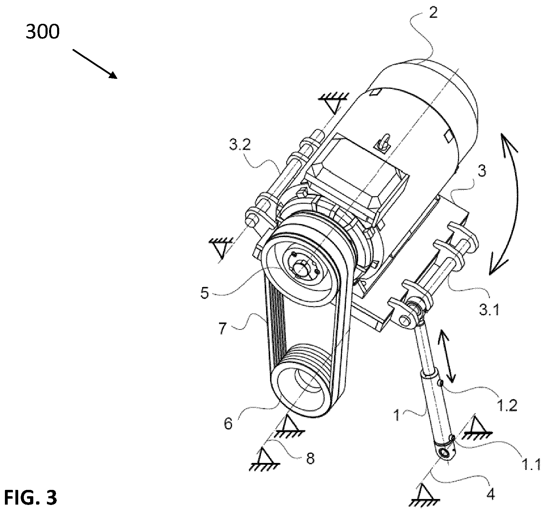

Eine weitere Ausführungsform des erfindungsgemäßen Riemenantriebs 300 ist in Fig. 3 dargestellt.

Fig. 3 zeigt den Aufbau des automatischen Riemenspannsystems mittels Motorwippe. Der Elektromotor 2 ist auf der Motorwippe 3 montiert. Die Motorwippe 3 ist in der Achse 3.2 drehbar gelagert. Die Achse 3.2 ist fest mit dem Maschinengehäuse verbunden. Die Scheibe 5 ist mit dem Rotor des Elektromotors 2 verbunden. Die Scheibe 5 treibt über einen Riemen 7 die Scheibe 6 an. Die Scheibe 5 ist somit die treibende Scheibe und die Scheibe 6 die getriebene Scheibe des Riemengetriebes. An der Scheibe 6 ist das angetriebene Element 8 (Rotor, Kupplung, weiteres Getriebe etc.) angebracht. Der Hydraulikzylinder 1 ist drehbar mit der Achse 3.1 der Motorwippe verbunden. Am anderen Ende ist der Hydraulikzylinder 1 drehbar, jedoch starr mit dem Maschinengehäuse im Punkt 4 verbunden. Die Verstellung des Achsabstandes zwischen Scheibe 5 und 6 und somit auch die Einstellung der Riemenspannung erfolgt durch Aus- und Einfahren des Hydraulikzylinders 1. Zum Spannen des Riemens 7 wird der Hydraulikzylinder 1 am kolbenseitigen Anschluss 1.1 mit Druck vom Hydrauliksystem (Riemenspannvorrichtung gemäß Fig. 1) beaufschlagt. Die Motorwippe wird nach oben bewegt. Zum Entspannen des Riemens 7 oder um einen Riemenwechsel vorzunehmen, wird der Hydraulikzylinder 1 am stangenseitigen Anschluss 1.2 mit Druck vom Hydrauliksystem beaufschlagt. Die Motorwippe wird nach unten bewegt. Alternativ kann das System so ausgelegt sein, dass das Entspannen des Riemens durch ein Schwenken der Motorwippe nach unten aufgrund der Gewichtskraft des Motors 2 erfolgt. Die Messung der Riemenspannung und die Bestimmung des Verschleißgrades des Riemens wurde bereits im Zusammenhang mit Fig. 1 beschrieben.

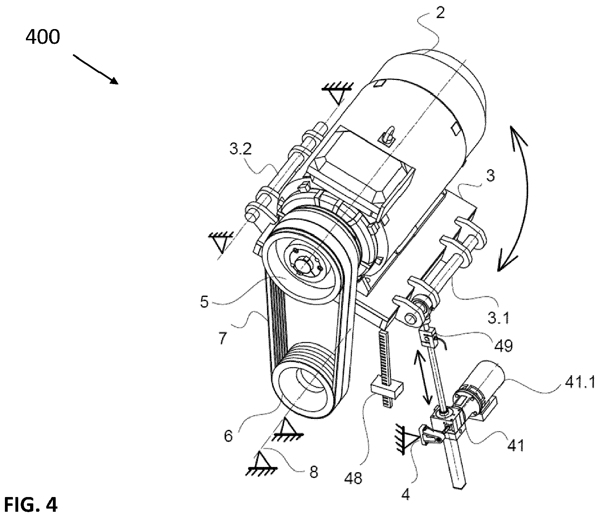

Eine Abwandlung der Ausführungsform 300 gemäß Fig. 3 ist in der Ausführungsform 400 gemäß Fig. 4 dargestellt. Gleiche Bezugszeichen entsprechen gleichen Komponenten. Anstelle des Hydraulikzylinders in Fig. 3 ist hier eine Hubspindelgetriebe 41 mit einem Stellmotor 41.1 vorgesehen. Die Verstellung des Achsabstandes zwischen Scheibe 5 und 6 und somit auch die Einstellung der Riemenspannung erfolgt hier durch Aus- und Einfahren einer Spindel des Hubspindelgetriebes 41. Weiterhin ist in dieser Ausführungsform eine Kraftmessdose 49 vorgesehen, um die mit dem Hubspindelgetriebe 41 auf die Motorwippe 3 ausgeübte Kraft zu messen, die als eine der Riemenspannung des Riemens 7 entsprechenden Messgröße dient. In dieser Ausführungsform wird der Verschleißgrad des Riemens 7 mittels einer Wegmesseinrichtung 48 gemessen. Eine Längendehnung des Riemens hat zur Folge, dass die Achse 3.1 der Motorwippe immer weiter um die Drehachse 3.2 gedreht werden muss, um eine vorbestimmte Riemenspannung zu erzielen. Das führt zu einer Änderung der mit der Wegmesseinrichtung 48 gemessen Lage der Motorwippe 3. Diese Änderung ist eine der Längendehnung des Riemens 7 entsprechende Messgröße.

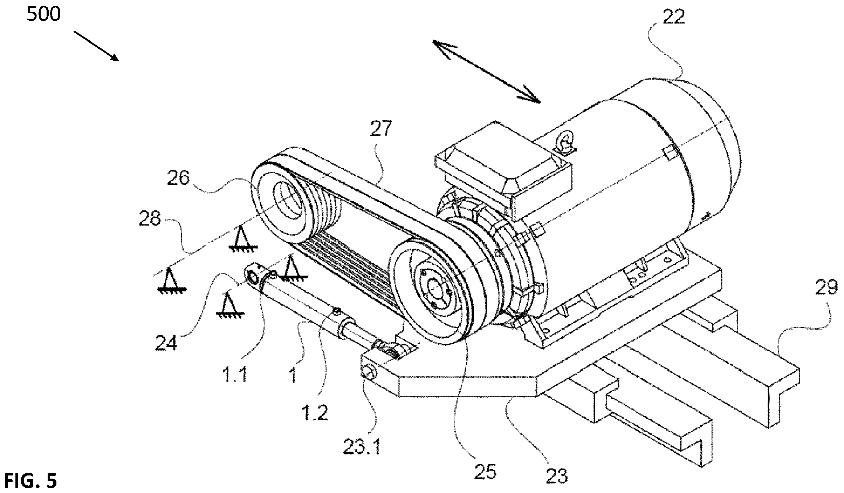

Eine andere Ausführungsform des erfindungsgemäßen Riemenantriebs 500 ist in Fig. 5 dargestellt.

Fig. 5 zeigt den Aufbau des automatischen Riemenspannsystems mittels Spannschiene. Der Elektromotor 22 ist auf der Motorplatte 23 montiert. Die Motorplatte ist über Führungselemente 29 gelagert welche eine Linearbewegung zulassen (Vergleichbar mit einer Gleitschiene). Die Scheibe 25 ist mit dem Rotor des Elektromotors 2 verbunden. Die Scheibe 25 treibt über einen Riemen 27 die Scheibe 26 an. Die Scheibe 25 ist somit die treibende Scheibe und die Scheibe 26 die getriebene Scheibe des Riemengetriebes. An der Scheibe 26 ist das angetriebene Element 28 (Rotor, Kupplung, weiteres Getriebe etc.) angebracht. Der Hydraulikzylinder 1 ist an der Achse 23.1 mit der Motorplatte verbunden. Am anderen Ende ist der Hydraulikzylinder 1 mit dem Maschinengehäuse im Punkt 24 verbunden. Die Verstellung des Achsabstandes zwischen Scheibe 25 und 26 und somit auch die Einstellung der Riemenspannung erfolgt durch Aus- und Einfahren des Hydraulikzylinders 1. Zum Spannen des Riemens 27 wird der Hydraulikzylinder 1 am kolbenseitigen Anschluss 1.1 mit Druck vom Hydrauliksystem (Riemenspannvorrichtung nach Fig. 1) beaufschlagt. Die Motorplatte wird nach rechts bewegt. Zum Entspannen des Riemens 27 oder um einen Riemenwechsel vorzunehmen, wird der Hydraulikzylinder 1 am stangenseitigen Anschluss 1.2 mit Druck vom Hydrauliksystem beaufschlagt. Die Motorplatte wird nach links bewegt. Die Messung der Riemenspannung und die Bestimmung des Verschleißgrades des Riemens wurde im Zusammenhang mit Fig. 1 bzw. 2 beschrieben.

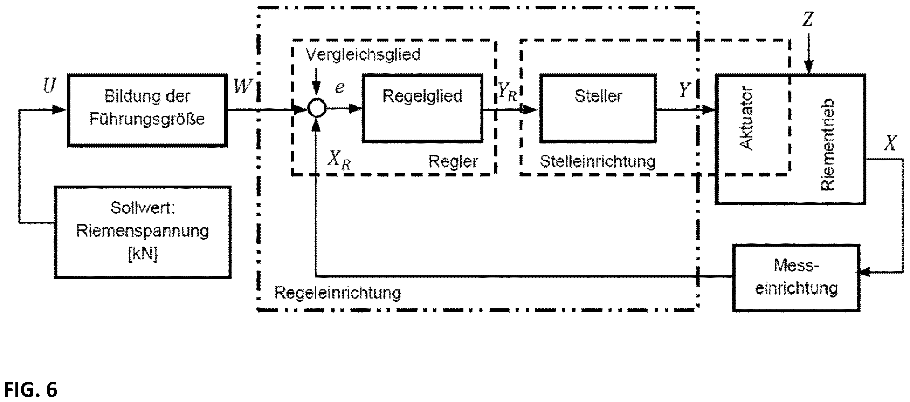

Fig. 6 ist eine allgemeine Darstellung des Verfahrensablaufs zur Regelung der Riemenspannung.

Es wird ein Sollwert U für die Riemenspannung vorgegeben (z.B. in kN) und daraus eine Führungsgröße (Vergleichsgröße entsprechend der vorgegebenen Riemenspannung) W gebildet, die mit der von der Messeinrichtung gemessenen Riemenspannung X verglichen wird. Wenn sich im Vergleichsglied eine Abweichung von der Führungsgröße ergibt, wird durch das Regelglied eine Veränderung (Korrektur) der Stellgröße Y hervorgerufen. Die veränderte Stellgröße bewirkt eine Bewegung des Aktuators, der daraufhin eine geänderte Kraft auf den Riementrieb ausübt, was wiederum zu einer geänderten Riemenspannung führt. Auf diese Weise wird die Riemenspannung auf den vorgegebenen Wert geregelt. Hier kommt optional noch hinzu, dass unabhängig von der Regelung der Riemenspannung eine Änderung der Riemenlänge erfasst wird, um eine Dehnung bzw. einen Abnutzungsgrad des Riemens zu bestimmen. Bei einem Überschreiten einer vorbestimmen Dehnung sollte der Riemen gewechselt werden, weshalb dafür ein Signal (z.B. optisch oder akustisch) ausgegeben werden kann.

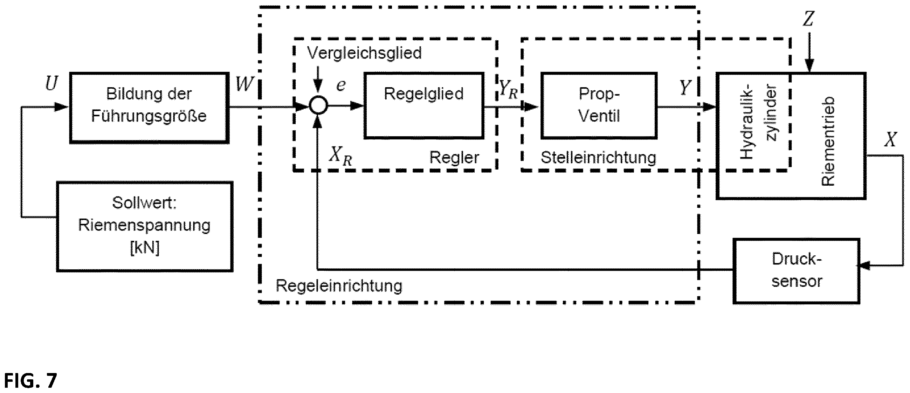

Fig. 7 ist eine Darstellung des Verfahrensablaufs zur Regelung der Riemenspannung im Falle der Ausführungsform gemäß Fig. 2, 3 und 5.

Der allgemeine Steller ist hier ein hydraulisches Proportionalventil, der allgemeine Aktuator ist hier ein Hydraulikzylinder und die allgemeine Messeinrichtung ist hier ein Drucksensor. Die Regelung ist ansonsten analog zu der Beschreibung zu Fig. 6.

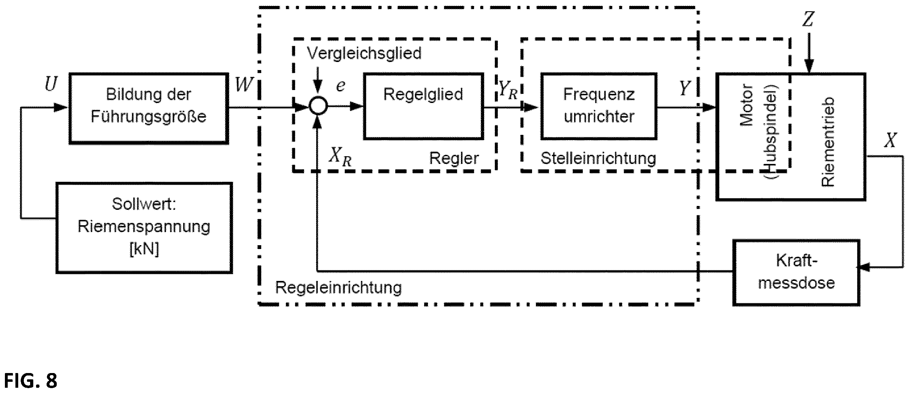

Fig. 8 ist eine Darstellung des Verfahrensablaufs zur Regelung der Riemenspannung im Falle der Ausführungsform gemäß Fig. 4.

Der allgemeine Steller ist hier ein Frequenzumrichter, der allgemeine Aktuator ist hier ein Motor mit Hubspindel und die allgemeine Messeinrichtung ist hier eine Kraftmessdose. Die Regelung ist ansonsten analog zu der Beschreibung zu Fig. 6.

Die dargestellte Ausführungsform ist lediglich beispielhaft und der vollständige Umfang der vorliegenden Erfindung wird durch die Ansprüche definiert.

## Patentansprüche

1. Riemenspannvorrichtung, umfassend:
eine Spannvorrichtung zum Erzeugen einer Kraft zum Spannen eines Riemens in einem Riemenantrieb;
eine Messeinrichtung zum Messen einer Riemenspannung oder einer der Riemenspannung entsprechenden Messgröße; und
eine Stelleinrichtung zum Stellen der mit der Spannvorrichtung erzeugten Kraft basierend auf Signalen von der Messeinrichtung.

2. Riemenspannvorrichtung nach Anspruch 1, wobei die Stelleinrichtung dazu ausgebildet ist, die mit der Spannvorrichtung erzeugten Kraft so zu stellen, dass ein Sollwert der gemessenen Riemenspannung oder der der Riemenspannung entsprechenden Messgröße erzielt wird.

3. Riemenspannvorrichtung nach Anspruch 1 oder 2, wobei die Stelleinrichtung dazu ausgebildet ist, im Betrieb des Riemenantriebs zyklisch oder kontinuierlich die gemessene Riemenspannung oder die der Riemenspannung entsprechenden Messgröße zu überwachen.

4. Riemenspannvorrichtung nach einem der Ansprüche 1 bis 3, wobei die Spannvorrichtung ein Hubspindelgetriebe oder einen Linearaktuator umfasst, insbesondere einen Hydraulikzylinder oder einen Elektrozylinder.

5. Riemenspannvorrichtung nach einem der Ansprüche 1 bis 4, wobei die Messeinrichtung zum Messen der Riemenspannung oder der der Riemenspannung entsprechenden Messgröße umfasst:
einen Kraftaufnehmer, insbesondere einen elektronischen Kraftaufnehmer, eine Kraftmessdose, einen hydraulischen Kraftaufnehmer, einen Druckaufnehmer, einen Drucksensor, oder einen Dehnmesstreifen; oder
eine Messeinrichtung zum Messen der Stromaufnahme eines Elektromotors zum Erzeugen der Kraft.

6. Riemenspannvorrichtung nach einem der Ansprüche 1 bis 5, weiterhin umfassend:
eine Messvorrichtung zum Erfassen einer Längendehnung des Riemens oder einer der Längendehnung des Riemens entsprechenden Messgröße.

7. Riemenspannvorrichtung nach Anspruch 6, wobei die Messvorrichtung zum Erfassen der Längendehnung des Riemens oder einer der Längendehnung des Riemens entsprechenden Messgröße ausgebildet ist zum:
Messen des Hubes des Hubspindelgetriebes und Bestimmen der Längendehnung aus dem gemessenen Hub, wenn die Spannvorrichtung ein Hubspindelgetriebe umfasst;
Messen eines Achsabstandes einer treibenden und einer getriebenen Scheibe des Riemenantriebs und Bestimmen der Längendehnung aus dem gemessenen Achsabstand, insbesondere wobei die Messvorrichtung zum Erfassen der Längendehnung des Riemens einen Seilzug-Wegsensor, einen Neigungssensor, einen Laser-Distanzsensor oder ein Winkelmessgerät umfasst; oder
Messen einer Positionsänderung eines Linearaktuators und Bestimmen der Längendehnung aus der gemessenen Positionsänderung.

8. Riemenspannvorrichtung nach Anspruch 6 oder 7, wobei die Messvorrichtung zum Erfassen der Längendehnung dazu ausgebildet ist, bei Erreichen oder Überschreiten eines vorgegebenen Schwellwerts der Längendehnung des Riemens ein Signal auszugeben.

9. Riemenspannvorrichtung nach einem der Ansprüche 1 bis 8, wobei:
wobei die Spannvorrichtung einen Hydraulikzylinder umfasst; und
die Stelleinrichtung eine Hydraulik-Steuereinheit zum Einstellen eines Drucks im Hydraulikzylinder auf einen Drucksollwert, der einem Sollwert einer Riemenspannung entspricht, umfasst, insbesondere wobei ein Druckregelventil zur Vorgabe des Drucksollwerts vorgesehen ist.

10. Riemenspannvorrichtung nach Anspruch 9, wobei die Hydraulik-Steuereinheit dazu ausgebildet ist, im Betrieb des Riemenantriebs zyklisch oder kontinuierlich den Druck im Hydraulikzylinder zu überwachen;
wobei optional die Hydraulik-Steuereinheit dazu ausgebildet ist, im Falle eines Unterschreitens eines unteren Schwellwerts des Drucks und/oder im Falle eines Überschreitens eines oberen Schwellwerts des Drucks, den Druck auf den Drucksollwert einzustellen.

11. Riemenantrieb, umfassend:
einen Riemen; und
eine Riemenspannvorrichtung gemäß einem der Ansprüche 1 bis 10.

12. Riemenantrieb nach Anspruch 11, umfassend:
einen Motor, insbesondere einen Elektromotor, mit einer treibenden Scheibe; und
eine getriebene Scheibe;
wobei die treibende Scheibe dazu vorgesehen ist, mit dem Riemen die getriebene Scheibe anzutreiben; und
und wobei die Riemenspannvorrichtung dazu ausgebildet ist, zum Spannen des Riemens einen Abstand zwischen einer Drehachse der treibenden Scheibe und einer Drehachse der angetriebenen Scheibe zu ändern.

13. Verfahren zum Einstellen einer Riemenspannung eines Riemens in einem Riemenantrieb, umfassend:
Erzeugen einer Kraft zum Spannen des Riemens, wobei die Kraft insbesondere zwischen einer Drehachse einer treibenden Scheibe und einer Drehachse einer angetriebenen Scheibe wirkt, wodurch ein Abstand der Drehachsen gestellt wird;
Messen einer Riemenspannung oder einer der Riemenspannung entsprechenden Messgröße mit einer Messeinrichtung; und
Stellen der Kraft basierend auf Signalen von der Messeinrichtung.

14. Verfahren nach Anspruch 13, wobei die mit der Spannvorrichtung erzeugte Kraft so gestellt wird, dass ein Sollwert der gemessenen Riemenspannung oder der der Riemenspannung entsprechenden Messgröße erzielt wird.

15. Verfahren nach Anspruch 13 oder 14, weiterhin umfassend:
Erfassen einer Längendehnung des Riemens;
wobei optional bei Erreichen oder Überschreiten eines vorgegebenen Schwellwerts der Längendehnung des Riemens ein Signal ausgegeben wird.
